## Europäisches Patentamt
## European Patent Office
## Office européen des brevets

(11) . Numéro de publication: **0 014 163**
**B1**

(12) # FASCICULE DE BREVET EUROPEEN

(45) Date de publication du fascicule du brevet:
**29.09.82**

(51) Int. Cl.³: **A 47 J 37/04**

(21) Numéro de dépôt: **80420001.2**

(22) Date de dépôt: **07.01.80**

---

(54) **Appareil de cuisson à balancelle.**

---

(30) Priorité: **09.01.79 FR 7901165**

(43) Date de publication de la demande:
**06.08.80 Bulletin 80/16**

(45) Mention de la délivrance du brevet:
**29.09.82 Bulletin 82/39**

(84) Etats contractants désignés:
**DE GB NL**

(56) Documents cités:
**FR-A-494 965**
**US-A-4 114 523**

(73) Titulaire: **MANUFACTURE METALLURGIQUE DE TOURNUS, 4, avenue de la Résistance, F-71700 Tournus (FR)**

(72) Inventeur: **Vaussanvin, Marcel, "Limone" Commune de Boyer, F-71700 Tournus (FR)**

(74) Mandataire: **Pascaud, Claude et al, PECHINEY UGINE KUHLMANN 28, rue de Bonnel, F-69003 Lyon (FR)**

---

ACTORUM AG

## Appareil de cuisson à balancelle

La présente invention concerne un dispositif de cuisson des aliments destiné notamment à les griller, les frire ou les braiser.

La cuisson et le réchauffage des aliments se fait habituellement dans un ustensile tel que casserole, poêle, cocotte, etc . . . . placé sur une source de chaleur et il faut exercer une certaine surveillance et remuer de temps à autre les aliments si l'on veut éviter le collage et répartir la chaleur dans la masse.

On peut obtenir une cuisson uniforme sans intervention manuelle à l'aide, par exemple, d'une rôtissoire munie d'un tourne-broche, ce qui permet de placer successivement les différentes faces du produit à cuire en face de la source de chaleur. Mais l'utilisation d'un tourne-broche n'est possible que pour certains aliments susceptibles d'être facilement embrochés ou maintenus en place au cours du mouvement de rotation.

On connaît également, par le brevet français no 2 140 851, un dispositif pour la friture d'aliments coupés en morceaux constitué d'un tambour rotatif destiné à recevoir les aliments et d'un élément de rayonnement thermique disposé dans le tambour. La rotation du tambour fait que les aliments sont animés d'un mouvement aléatoire dans la zone de rayonnement thermique et peuvent ainsi être cuits de manière uniforme.

L'utilisation d'un tambour rend l'appareil d'une accessibilité assez malaisée et complique les opérations de remplissage et de vidage ainsi que le nettoyage. D'autre part, la fait que la source de chaleur se trouve à l'intérieur du tambour, même si elle est protégée par un déflecteur, entraîne que les aliments ou les corps gras peuvent tomber sur la source de chaleur ou sa protection, provoquant des fumées et des odeurs désagréables.

On connaît également, par le brevet américain no 4 073 225, un dispositif de cuisson en continu de boulettes de viande, animé d'un mouvement oscillant; cependant, ce dispositif présente les inconvénients suivants:

– la durée de transfert des produits étant fixée par la géométrie du dispositif et la nature et la forme des produits, le temps de cuisson est indépendant de la qualité des produits entrant dans l'appareil; or, celle-ci est variable suivant la provenance, les conditions de préparation et de stockage antérieurs; il en résulte donc des variations de degré de cuisson des aliments, non ajustables à volonté;

– le retournement des aliments à griller nécessitant un grand nombre de renversements pour éviter la calcination d'une face exposée préférentiellement et l'avancement étant donné par un système de chicanes tel que chaque morceau avance à chaque balancement, l'appareil est forcément très long. Il peut convenir pour des quantités importantes, en cuisson collective par exemple, mais il ne saurait être suffisamment réduit pour une utilisation domestique.

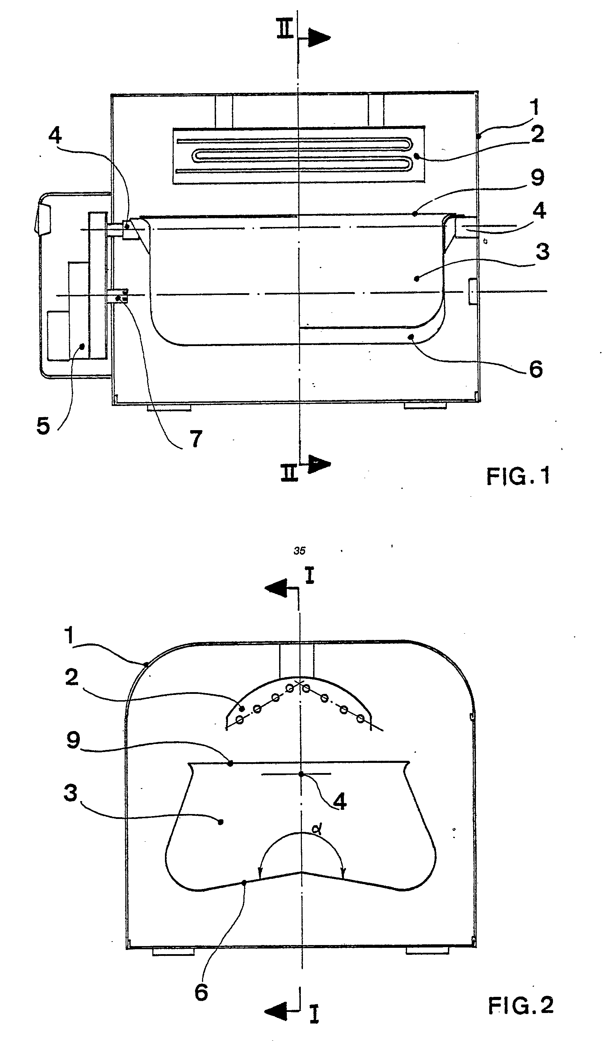

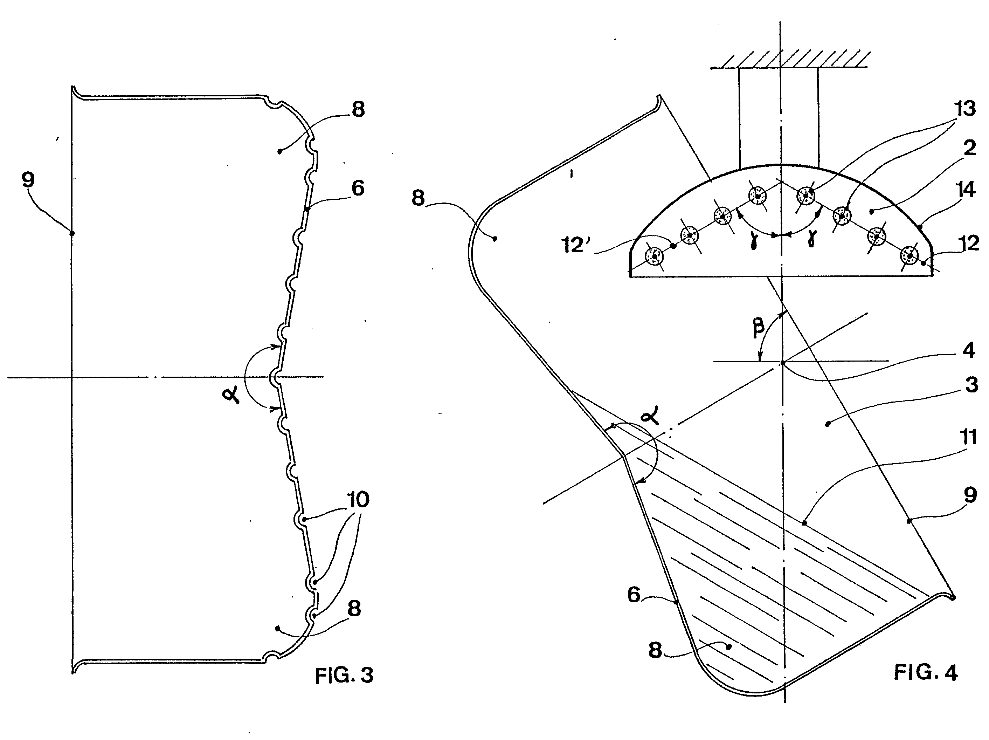

On connaît aussi un ancien brevet français no 494 965 qui décrit un four métallurgique de type «tunnel» comportant un fond convexe ou concave crénelé (repères 102 et 101 des figures 3 et 2). Cependant aucune justification, sinon constructive, n'est donnée à la forme de ce fond.

Le but de la présente invention est de remédier à ces inconvénients tout en conservant le principe d'une exposition successive des faces des aliments à la source de chaleur, assurant ainsi une cuisson uniforme en l'absence de toute surveillance. Elle réside essentiellement dans la forme du récipient utilisé, de sa position relative par rapport à la source de chaleur, de la disposition particulière ce dette source de chaleur, du dispositif de production du mouvement oscillant.

Le dispositif selon l'invention est constitué d'une source de chaleur fixe située au-dessus d'un récipient ouvert, destiné à recevoir les aliments, lequel est animé d'un mouvement basculant alternatif et périodique autour d'un axe sensiblement horizontal.

Grâce au mouvement de basculement, les aliments présentent successivement et de façon aléatoire, leurs différentes faces devant la source de chaleur, permettant ainsi une cuisson uniforme sans surveillance.

L'ampleur du mouvement basculant est limitée de telle sorte que les aliments ne puissent déborder du récipient mais doit cependant atteindre une valeur suffisante pour permettre aux aliments de glisser, rouler et/ou basculer sur le fond. L'angle de balancement maximal est donc généralement compris entre 30 et 90° par rapport à l'horizontale.

1 °/ – Forme du récipient – le récipient a la forme générale d'un cylindre dont les génératrices sont parallèles à l'axe de rotation et s'appuient sur un contour symétrique par rapport à un plan passant par l'axe de rotation et présentant un point anguleux rentrant situé dans ce plan; de ce fait, le fond du récipient présente une arête qui contribue au retournement des aliments lors du balancement. Dans sa réalisation la plus simple, le fond a la forme générale d'un dièdre rentrant dont l'angle est compris de préférence entre 200 et 185 °.

Il peut comporter, de plus, des nervures, rainures ou alvéoles, de faible hauteur et de profil généralement arrondi. Le rôle de ces rainures nervures ou alvéoles, est double: d'une part, elles évitent le collage des aliments sur le fond, d'autre part, elles contribuent à une meilleure présentation des aliments sur toutes leurs faces à la source de chaleur (cuisson homogène). Dans le cas de rainures ou nervures, celles-ci sont de préférence disposées soit parallèlement à l'axe de basculement, soit en chevrons dont l'axe de ceux-ci est perpendiculaire à l'axe de basculement.

Le rapport de la hauteur hors tout du récipient (H) à sa largeur maximale (1) est de préférence compris entre 1/4 et 1.

Ce récipient peut, de manière connue, être revêtu intérieurement ou extérieurement de matériaux appropriés (anodisation, revêtement anti-adhérent, émail, etc . . .).

Il peut être monté de façon fixe ou amovible sur son axe de basculement. Ce dernier cas est préférable en raison des facilités de mise en place et de retrait en début et fin de cuisson, ainsi que de nettoyage intermédiaire dudit récipient.

Dans le cas d'un récipient fixe, l'arrêt à l'une des positions extrêmes de basculement facilite le déchargement à l'aide d'une spatule, cuiller, etc . . .

2 °/ Source de chaleur – les moyens de chauffage utilisés peuvent être très divers; par exemple, chauffage par flamme (s) ou braises, résistance(s) électrique(s), rayonnement infrarouge, émission de micro-ondes ou par air chaud pulsé.

Dans le cas du chauffage par micro-ondes, la cuve serait exécutée en matériau non réfléchissant, par exemple céramique ou matière plastique mais pas en métal.

La source de chaleur est située au-dessus de l'ouverture du récipient; il n'y a donc aucun risque de contact entre les aliments et (ni de ruissellement des graisses vers) la source de chaleur.

Cependant, une meilleure efficacité est réalisée quand la source de chaleur est constituée de deux nappes chauffantes ou émettrices, sensiblement planes et sensiblement parallèles à la surface des aliments dans les positions extrêmes du mouvement de basculement. Dans le cas particulier de la cuisson des pommes frites, par exemple, cet angle est égal à 30° environ.

De plus, dans le cas de chauffage par rayonnement indirect avec l'aide d'un dispositif réflecteur, le centre de la zone focale de celui-ci se trouve au voisinage immédiat de l'axe de balancement.

3 °/ – Mécanisme de balancement – dans le cas où le récipient est amovible, il est intéressant d'utiliser l'appareillage à d'autres fins en particulier comme tourne broche. L'exiguité des locaux domestiques, en particulier des cuisines, fait qu'un gain de place dû à l'utilisation d'appareillages polyvalents, est toujours très apprécié. Le mécanisme suivant l'invention permet donc d'obtenir, à la fois, un mouvement de rotation et un mouvement de balancement de même période sur deux axex parallèles et, par conséquent, l'utilisation à volonté de l'un ou de l'autre de ceux-ci comme axe d'entraînement suivant les cas. Ce dispositif est de construction simple et robuste. Il se caractérise en ce que l'axe moteur porte un pignon double comportant deux secteurs de dentures situés du même côté par rapport à l'axe moteur qui engrènent successivement au cours d'une rotation sur deux secteurs opposés par rapport à l'axe moteur, solidaires d'un balancier mobile sur un axe, lequel est situé hors du cercle balayé par le pignon double.

Ce balancier peut comporter un autre secteur de dentures concentriques à l'axe de balancement qui engrène à son tour sur un engrenage solidaire de l'axe de sortie oscillant.

Dans une autre réalisation, le mouvement de balancement peut être pris directement sur le balancier.

Le plan des axes parallèles, axe-moteur et axe du balancier constitue un plan de symétrie de la cinématique du dispositif.

Les dimensions relatives des différents éléments du dispositif fixent l'angle d'inclinaison maximum du récipient de cuisson.

L'ensemble du dispositif peut également comprendre un système d'arrêt du balancement dans une position prédéterminée, de manière connue en soi.

L'invention sera mieux comprise grâce à la description d'un mode de réalisation de celle-ci.

Les figures 1 et 2 représentent des vues en coupe de face (suivant I–I) et en coupe de profil (suivant II–II) de l'ensemble de l'appareillage.

La figure 3 représente une vue en coupe d'un récipient de cuisson.

La figure 4 représente une vue en coupe d'un système de chauffage par résistances électriques gainées et réflecteur.

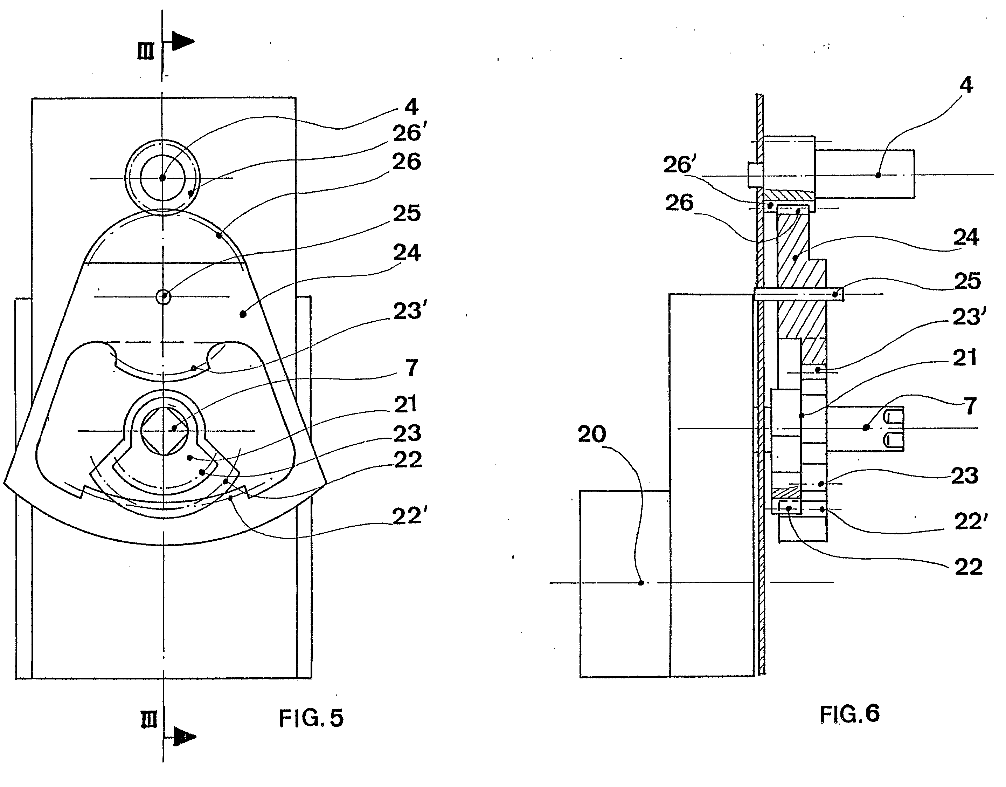

Les figures 5 et 6 représentent une vue de face et de profil en coupe axiale (suivant III–III) du mécanisme de balancement.

L'appareillage comprend un châssis (1) formant capotage sur lequel est monté le dispositif de chauffage (2) situé au-dessus de l'ouverture (9) d'un récipient (3), amovible et mobile autour d'un axe (4) sensiblement horizontal et de forme particulière, décrite ci-après.

Ce récipient, destiné à recevoir les aliments à cuire, est animé autour de son axe (4) d'un mouvement de balancement d'amplitude donnée à l'aide d'un dispositif moteur (5) approprié. Ce dispositif comporte également un axe de sortie (7) animé d'un mouvement de rotation continu, utilisable à d'autres fins (rôtissoire).

Le récipient (3) a la forme générale d'un cylindre dont les génératrices sont parallèles à l'axe de balancement (4) et qui s'appuient sur un contour symétrique par rapport à un plan passant par l'axe de rotation (4) et présentant un point anguleux rentrant, situé dans ce plan; de ce fait, le fond du récipient (6) présente une arête qui contribue au retournement des aliments lors du balancement. Dans sa réalisation la plus simple, le fond (6) a la forme générale du dièdre rentrant, dont l'angle (α) est compris, de préférence, entre 200° et 185°.

Dans une réalisation préférentielle, le fond (6) est muni de nervures (10) de forme sensiblement hémi-cylindrique et parallèles à l'axe (4) et disposées de façon équidistante sauf au voisinage du bord arrondi (8) où elles sont plus resserrées.

Le dispositif de chauffage comporte des résistances électriques gainées (13) disposées suivant deux nappes sensiblement planes (12) et (12') symétriques par rapport à un plan vertical passant par l'axe (4) et faisant avec celui-ci un angle (γ). Dans une réalisation préférée, ces nappes sont sensiblement parallèles à la surface des aliments (11) dans la position de basculement extrême (β) du récipient (3). Dans le cas d'une friteuse pour pommes frites, les angles β et γ sont égaux à 30° environ.

Ce dispositif de chauffage est complété par un réflecteur (14) de forme générale cylindrique situé au-dessus et au voisinage des résistances chauffantes (13), et dont les centres de courbure de celui-ci (14) sont situés au voisinage de l'axe (4).

Le dispositif de balancement comporte un ensemble moto-réducteur électrique (20) qui entraîne l'arbre (7) en rotation continue à faible vitesse angulaire, par exemple, entre 0,1 et 10 t/minute.

Cet arbre supporte un pignon double (21) comportant deux secteurs de dentures (22) et (23) qui engrènent successivement avec les deux secteurs de dentures (22') et (23') du balancier (24) mobile autour d'un arbre fou (25). Le balancier (24) comporte un secteur denté (26) dont l'axe est confondu avec l'axe de l'arbre fou (25) et qui engrène avec l'engrenage (26') solidaire et concentrique avec l'arbre de balancement (4).

Les extrémités des arbres (4) et (7) sont munis de dispositifs d'entraînement adéquats relativement au récipient (3) et à la broche de la rôtissoire, respectivement.

Le dispositif suivant l'invention permet de griller, frire ou braiser des aliments de toute nature, en particulier des viandes ou légumes, de tailles et formes variées, avec ou sand adjonction de corps gras. Il permet en particulier la préparation de pommes frites légères en évitant l'immersion dans l'huile ou autre corps gras à l'état liquide.

## Revendications

1. Dispositif de cuisson à balancelle comportant une source de chaleur située au-dessus d'un récipient (3) muni d'un fond (6) et ouvert vers le haut (9) destiné à recevoir des aliments, lequel est animé d'un mouvement de balancement alternatif et périodique autour d'un axe sensiblement horizontal (4), le récipient (3) possédant la forme générale d'un cylindre dont les génératrices sont parallèles à l'axe de rotation (4), caractérisé en ce que la génératrice de la surface cylindrique s'appuie sur un contour symétrique par rapport à un plan passant par l'axe de rotation (4) et qui présente un point anguleux rentrant situé dans ce plan, l'arête correspondante de la surface cylindrique ayant pour but de retourner les aliments en cours de fonctionnement du dispositif.

2. Dispositif selon la revendication 1, caractérisé en ce que le fond (6) opposé à l'ouverture (9) a la forme d'un dièdre rentrant.

3. Dispositif suivant une des revendications 1 ou 2, caractérisé en ce que le récipient est amovible.

4. Dispositif suivant une des revendications 1 ou 2, caractérisé en ce que l'angle (α) rentrant est compris entre 185° et 200°.

5. Dispositif suivant l'une des revendications 1 à 4, caractérisé en ce que le fond (6) comporte des nervures (10), des rainures ou des alvéoles de faible hauteur et à contours arrondis.

6. Dispositif suivant la revendication 5, caractérisé en ce que les rainures ou nervures (10) sont parallèles entre elles.

7. Dispositif suivant la revendication 6, caractérisé en ce que les rainures ou nervures (10) sont parallèles à l'axe de balancement (4) ou sous forme de chevrons d'axe perpendiculaire à l'axe de balancement (4).

8. Dispositif suivant la revendication 1, caractérisé en ce que le dispositif de chauffage (2) comporte deux nappes radiantes ou émettrices (12, 12') sensiblement parallèles à la surface libre des aliments (11) dans les positions de basculement extrêmes du récipient (3).

9. Dispositif suivant la revendication 8, caractérisé en ce que la source de chaleur (2) comporte un dispositif réflecteur (14) dont le centre de la zone focale est dans le voisinage immédiat de l'axe de balancement (4).

10. Dispositif suivant la revendication 1, caractérisé en ce que le mécanisme de balancement comporte également un arbre de sortie (7) d'entraînement en rotation continue de même période que le mouvement de balancement.

11. Dispositif suivant la revendication 10, caractérisé en ce que l'axe moteur (7) porte un pignon double comportant deux secteurs de dentures (22, 23) situés du même côté par rapport à l'axe moteur (7) qui engrènent successivement au cours d'une rotation avec deux secteurs (22' et 23') opposés par rapport à l'axe moteur (7) et solidaires d'un balancier (24) mobile autour d'un axe (25), lequel est situé hors du cercle balayé par le pignon double.

12. Dispositif suivant la revendication 11, caractérisé en ce que le plan des axes de rotation de l'axe moteur (7) et de l'axe du balancier (25) constitue un plan de symétrie de la cinématique du dispositif.

13. Dispositif suivant la revendication 1, caractérisé en ce que l'angle de balancement maximum (β) est compris entre 30° et 90° par rapport à l'horizontale.

## Patentansprüche

1. Kochvorrichtung mit oszillierendem Behälter einschliesslich einer unter dem Behälter (3) befindlichen Wärmequelle, wobei der Behälter (3) einen Boden (6) hat, nach oben offen ist, zur Aufnahme von Speisen dient, hin- und hergehend sowie periodisch um eine im wesentlichen waagerechte Achse schwenkbar ist und die Gesamtform eines Zylinders hat, dessen Mantellinien zur Drehachse (4) parallel sind, dadurch gekennzeichnet, dass die Mantellinie der Zylinderfläche den Verlauf einer Kontur hat, die zu einer durch die Drehachse (4) gehenden Ebene symmetrisch ist und einen in der Ebene liegenden einspringenden Winkelpunkt aufweist, wobei die entsprechende Kante der Zylinderfläche zum Umwenden der Speisen während des Betriebes der Vorrichtung dient.

2. Vorrichtung nach Anspruch 1, dadurch gekennzeichnet, dass der der Öffnung (9) gegenüberliegende Boden die Form eines einspringenden Zweiflachs hat.

3. Vorrichtung nach einem der Ansprüche 1 oder 2, dadurch gekennzeichnet, dass der Behälter abnehmbar ist.

4. Vorrichtung nach einem der Ansprüche 1 oder 2, dadurch gekennzeichnet, dass der einspringende Winkel (α) 185 bis 200° beträgt.

5. Vorrichtung nach einem der Ansprüche 1 bis 4, dadurch gekennzeichnet, dass der Boden (6) Rippen (10), Rillen oder Hohlräume geringer Höhe und mit abgerundeten Konturen aufweist.

6. Vorrichtung nach Anspruch 5, dadurch gekennzeichnet, dass die Rillen oder Rippen (10) zueinander parallel sind.

7. Vorrichtung nach Anspruch 6, dadurch gekennzeichnet, dass die Rillen oder Rippen (10) zur Schwenkachse (4) parallel sind oder die Form von Leisten mit zur Schwenkachse (4) senkrechter Achse haben.

8. Vorrichtung nach Anspruch 1, dadurch gekennzeichnet, dass die Heizvorrichtung (2) strahlende oder emittierende Lagen (12, 12') aufweist, die in den extremen Schwenklagen des Behälters (3) zur freien Oberfläche (11) der Speisen im wesentlichen parallel sind.

9. Vorrichtung nach Anspruch 8, dadurch gekennzeichnet, dass die Wärmequelle (2) eine reflektierende Vorrichtung (14) aufweist, deren Brennpunkt sich in unmittelbarer Nähe der Schwenkachse (4) befindet.

10. Vorrichtung nach Anspruch 1, dadurch gekennzeichnet, dass der Schwenkmechanismus auch eine Ausgangswelle (7) aufweist für den kontinuierlichen Drehantrieb mit derselben Periode wie die Schwenkbewegung.

11. Vorrichtung nach Anspruch 10, dadurch gekennzeichnet, dass die Antriebsachse (7) ein doppeltes Antriebszahnrad mit zwei Zahnsektoren (22, 23) aufweist, die sich bezüglich der Antriebsachse (7) auf derselben Seite befinden und im Verlauf einer Umdrehung aufeinanderfolgend mit zwei Sektoren (22', 23') kämmen, die bezüglich der Antriebsachse (7) gegenüberliegen und mit einem Schwinghebel (24) fest verbunden sind, der um eine Achse (25) beweglich ist und sich ausserhalb des vom doppelten Zahnrad überstrichenen Kreises befindet.

12. Vorrichtung nach Anspruch 11, dadurch gekennzeichnet, dass die Ebene der Drehachsen der Antriebsachse (7) und der Achse des Schwinghebels (25) eine Symmetrieebene der Kinematik der Vorrichtung bildet.

13. Vorrichtung nach Anspruch 1, dadurch gekennzeichnet, dass der maximale Schwenkwinkel (β) 30° bis 90° gegenüber der Waagerechten beträgt.

**Claims**

1. A rocking-type cooking device comprising a heat source disposed above a container (3) which is provided with a bottom (6) and which is open upwardly (at 9) for receiving food, which is actuated with an alternating and periodic rocking movement about a substantially horizontal axis (4), the container (3) being of the general shape of a cylinder of which the generatrices are parallel to the axis of rotation (4), characterised in that the generatrix of the cylindrical surface is disposed on a contour which is symmetrical with respect to a plane passing through the axis of rotation (4) and which has a re-entrant angular point disposed in said plane, the corresponding edge of the cylindrical surface being intended to turn the food over in the course of operation of the device.

2. A device according to claim 1 characterised in that the bottom (6) which is opposite to the opening (9) is in the form of a re-entrant dihedral configuration.

3. A device according to claim 1 or claim 2 characterised in that the container is removable.

4. A device according to claim 1 or claim 2 characterised in that the re-entrant angle (α) is from 185° to 200°.

5. A device according to one of claims 1 to 4 characterised in that the bottom (6) comprises ribs (10), grooves or cavities which are of small height and which are of a rounded configuration.

6. A device according to claim 5 characterised in that the grooves or ribs (10) are parallel to each other.

7. A device according to claim 6 characterised in that the grooves or ribs (10) are parallel to the rocking axis (4) or are in the form of chevron configurations, with their axis perpendicular to the rocking axis (4).

8. A device according to claim 1 characterised in that the heating means (2) comprises two radiant or emitter layers (12, 12') which are substantially parallel to the free surface of the food (11) in the limit positions in respect of rocking movement of the container (3).

9. A device according to claim 8 characterised in that the heat source (2) includes a reflector means (14), the centre of the focal region of which is in the immediate vicinity of the rocking axis (4).

10. A device according to claim 1 characterised in that the rocking mechanism also comprises an output shaft (7) for producing a continuous rotary drive of the same period as the rocking movement.

11. A device according to claim 10 characterised in that the drive shaft (7) carries a double pinion comprising two toothed sectors (22, 23) which are disposed in the same side with respect to the drive shaft (7) and which in the course of a revolution successively mesh with two sectors (22' and 23') which are disposed oppositely with respect to the drive shaft (7) and which are fixed with respect to a rocker member (24) movable about an axis (25) which is outside the circle swept by the double pinion.

12. A device according to claim 11 characterised in that the plane of the axes of rotation of the drive shaft (7) and the rocker member (25) form a plane of symmetry of the mechanism of the device.

13. A device according to claim 1 characterised in that the maximum angle of rocking movement (β) is from 30° to 90° with respect to the horizontal.

FIG. 1

FIG. 2

FIG. 3

FIG. 4

0 014 163

FIG.6

FIG.5

65